# EUROPEAN PATENT APPLICATION

(11) **EP 3 373 457 A1**
(43) Date of publication of application: **12.09.2018**
(21) Application number: 17159758.6
(22) Date of filing: 08.03.2017
(51) Int. Cl.: H04B 5/00, G07C 9/00, E05B 47/00, E05B 47/02, H02J 5/00, H02J 7/02, H02J 50/12

(54) **ELECTROMECHANICAL LOCK**

(71) Applicant: iLOQ Oy, 90230 Oulu (FI)
(72) Inventor: Tikkanen, Väinö, 90230 Oulu (FI)
(74) Representative: Kolster Oy Ab

(57) **Abstract**

The invention relates to a near-field communication - powered electromechanical lock. The lock comprises an antenna circuit (112) with a main resonator loop (202) comprising of a first loop antenna (204) coupled in series with a first capacitor (206) and a second capacitor (208), and coupled in parallel with a third capacitor (210) between the first part and the second part. The lock comprises also a passive near-field communication tag circuit (116) coupled with the antenna circuit, an energy storage (216) coupled with the passive near-filed communication tag circuit, a microcontroller (218) and an actuator (114) powered by the energy storage. The lock comprises one or more auxiliary resonator loops (224). The antenna circuit (112) is configured to harvest electric energy from a near-field communication reader, store energy through the passive near-field communication tag circuit into the energy storage, wherein the one or more auxiliary resonator loops are configured to balance the operation of the antenna circuit.

## Description

### Field

The invention relates to electromechanical locks, especially to locks that are near-field communication -powered.

### Background

Various types of electromechanical locks are replacing traditional mechanical locks. Electromechanical locks require an external supply of electric power, a battery inside the lock, a battery inside the key, or means for generating electric power within the lock making the lock user-powered. Electromechanical locks provide many benefits over traditional locks. They provide better security, and the control of keys or security tokens is easier.

One method of supplying power to a lock is to use near-field communication, NFC. In NFC, a near-field communication reader brought to near vicinity of a lock may generate an electric field and the lock may harvest operating power form the electric field. The harvesting operation is essential regarding the operation of the lock and it should be as reliable and efficient as possible.

### Brief description

The present invention seeks to provide an improved solution for realizing energy harvesting of an electromechanical lock.

According to an aspect of the present invention, there is provided a near-field communication -powered electromechanical lock comprising: an antenna circuit comprising a main resonator loop comprising of a first loop antenna coupled in series with a first capacitor in a first part of the loop and a second capacitor in a second part of the loop, and coupled in parallel with a third capacitor between the first part and the second part; a passive near-field communication tag circuit coupled with the antenna circuit; an energy storage coupled with the passive near-filed communication tag circuit; a microcontroller powered by the energy storage; an electrically-controlled actuator powered by the energy storage; one or more auxiliary resonator loops, each auxiliary resonator loop comprising of an auxiliary loop antenna coupled in series with fourth capacitor in a first part of the loop and a fifth capacitor in a second part of the loop, and coupled in parallel with a sixth capacitor between the first part and the second part; wherein, the antenna circuit is configured to harvest electric energy from a near-field communication reader, store energy through the passive near-field communication tag circuit into the energy storage, which provides sufficient electric power to the microcontroller and the actuator, and wherein the one or more auxiliary resonator loops are configured to balance the operation of the antenna circuit.

Some embodiments are described in the dependent claims.

### List of drawings

Example embodiments of the present invention are described below, by way of example only, with reference to the accompanying drawings, in which
Figure 1 illustrates an embodiment of a NFC-powered electronic locking system;
Figure 2 illustrates an embodiment of a NFC-powered electronic locking system in more detail; and
Figures 3A, 3B and 3C illustrate example of the realisation of the lock antenna 112.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

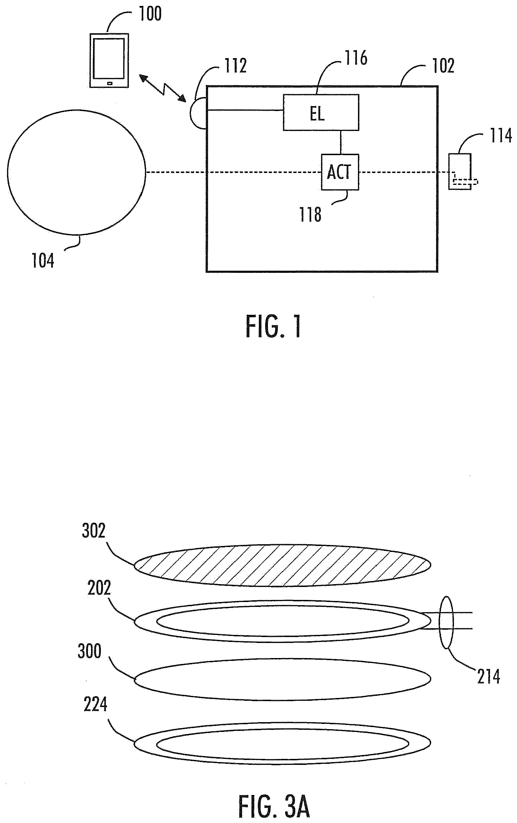

In an embodiment of the invention, an electronic key is utilized for wirelessly opening an electromechanical wireless and batteryless lock. The key may be carried by a person as a part of his wireless communication device. Figure 1 illustrates an embodiment of an electronic locking system. A user is about to open a door, and the user has a communication device 100.

The communication device 100 refers to a portable computing device. Such computing devices include wireless mobile communication devices such as a mobile phone, a smartphone, a tablet computer, a personal digital assistant (PDA) or a personal computer. The communication device 100 may have a wireless network channel connection to a wireless network. Some examples of different wireless networks are the universal mobile telecommunications system (UMTS) radio access network (UTRAN or E-UTRAN), long term evolution (LTE, known also as E-UTRA), long term evolution advanced (LTE-A), 5th generation mobile networks, Wireless Local Area Network (WLAN) based on IEEE 802.11stardard, worldwide interoperability for microwave access (WiMAX), personal communications services (PCS) and systems using ultra-wideband (UWB) technology. IEEE refers to the Institute of Electrical and Electronics Engineers or any other suitable standard/non-standard wireless communication means.

In an embodiment, the communication device 100 is equipped with a SIM/UICC card. SIM (Subscriber Identity Module) and UICC (Universal Integrated Circuit Card) are smart cards used in mobile terminals in GSM and UMTS networks. The smart cards comprise a processor, I/O circuits and a memory, typically a few hundred kilobytes or larger. The memory and the smart card may be utilised for example in to ensure the integrity and security of all kinds of personal data. The memory may store applications and storage space for data.

In an embodiment, the communication device 100 is equipped with a short-range wireless communication unit configured to communicate with other respective short-range units upon detecting such a unit.

In an embodiment, short-range wireless communication is realised with a Near Field Communication (NFC) technique. NFC is a set of short-range wireless technologies, typically requiring a distance of 4 cm or less. NFC operates at 13.56 MHz on ISO/IEC 18000-3 air interface and at rates ranging from 106 kbit/s to 424 kbit/s. NFC always involves an initiator and a target; the initiator actively generates a radio frequency (RF) field that can power a passive target. This enables NFC targets to take very simple form factors such as tags, stickers, key fobs, or cards that do not require batteries. Above, ISO stands for International Organization for Standardization and IEC for the International Electrotechnical Commission.

In a passive communication mode the initiator device provides a carrier field and the target device answers by modulating the existing field. In this mode, the target device may draw its operating power from the initiator-provided electromagnetic field, thus making the target device a transponder. In an embodiment, the communication device 100 is acting as the initiator.

The door comprises an electromechanical lock 102. The lock comprises a lock interface 104, a lock antenna 112 and locking mechanism 114. An example of the locking mechanism is a lock bolt. The lock interface 104 may be a doorknob turn knob or handle, for example. The lock antenna 112 is connected to an electronic circuitry 116 of the lock. The circuitry comprises a short-range communication device. The device may be an NFC transceiver. In an embodiment, the NFC transceiver of the lock is the target device.

When the user approaches the door he wishes to open, he brings the communication device 100 close to the lock antenna 112. The electronic circuitry of the lock is powered by the short-range transmission of the communication device and a transaction is initiated. In an embodiment, an authentication procedure may be executed. In the authentication procedure, the communication device reads an authentication challenge from the electronic circuitry 116 of the lock. The communication device 100 computes a response and transmits the response to the electronic circuitry of the lock. Next, the lock performs the authentication. In the authentication, the lock authenticates the response. In an embodiment, the response is authenticated against the challenge. If the authentication succeeds the lock is set to an openable state. All operations above may be performed using the power received from the short-range transmission of the communication device.

The above described challenge-response authentication method is just an example of the authentication procedure; also other authentication procedures can be used. In general, the authentication tasks may be divided between the lock and the communication device symmetrically or asymmetrically. When the communication device is brought in wireless contact with the lock, the lock and the device proceed with the authentication procedure. For example, the lock may authenticate the communication device, the communication device may authenticate the lock or the both parties authenticate each other.

The lock 102 thus comprises an electronic circuitry 116 and a lock antenna 112, a lock interface 104 and a locking mechanism 114 as previously described. The electronic circuitry 116 may be implemented as one or more integrated circuits, such as application-specific integrated circuits ASIC. Other embodiments are also feasible, such as a circuit built of separate logic components, or memory units and one or more processors with software. A hybrid of these different embodiments is also feasible. When selecting the method of implementation, a person skilled in the art will consider the requirements set on the power consumption of the device, production costs, and production volumes, for example. The electronic circuitry 116 may be configured to execute computer program instructions for executing computer processes. The lock 102 further comprises an electrically operated actuator 118 which may set the locking mechanism 114 to openable or closed state.

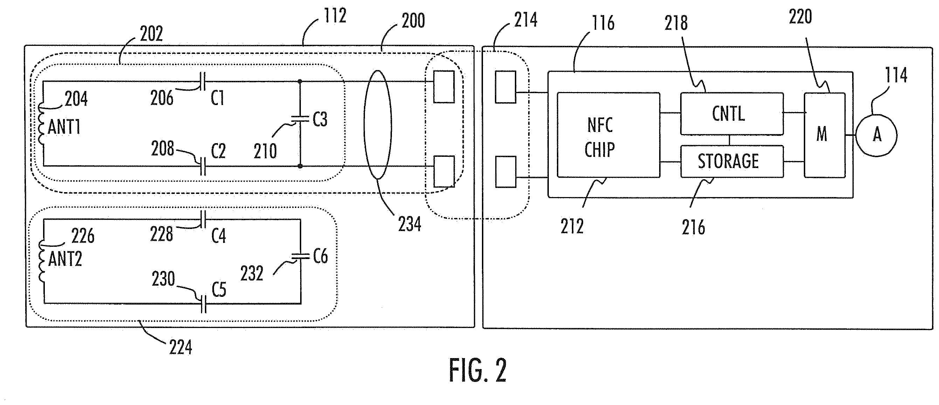

Figure 2 illustrates an embodiment of a NFC-powered electronic locking system in more detail. The lock comprises the electronic circuitry 116 and the lock antenna 112. It may be noted that figure 2 is a simplified diagram illustrating an embodiment and actual lock may comprise also other parts and connections not disclosed in the figure for simplicity.

The lock antenna 112 comprises an antenna circuit 200 comprising a main resonator loop 202. The main resonator loop 202 comprises a first loop antenna 204 coupled in series with a first capacitor 206 in a first part of the loop and a second capacitor 208 in a second part of the loop, and coupled in parallel with a third capacitor 210 between the first part and the second part.

The electronic circuitry 116 comprises a passive near-field communication tag circuit 212 coupled 214 with the antenna circuit 200.

The lock further comprises an energy storage 216 coupled with the passive near-filed communication tag circuit 212 and a microcontroller 218 powered by the energy storage 216. The lock further comprises a controller 220 for controlling actuator, the controller and the actuator both being powered by the energy storage 216.

In an embodiment, the lock further comprises in the antenna part 112 one or more auxiliary resonator loops 224. Each auxiliary resonator loop may comprise an auxiliary loop antenna 226 coupled in series with fourth capacitor 228 in a first part of the loop and a fifth capacitor 230 in a second part of the loop, and coupled in parallel with a sixth capacitor 232 between the first part and the second part.

In an embodiment, there number of capacitors may vary.

When the user approaches the door he wishes to open, he brings a communication device close to the antenna 112 of the lock. The communication device may act as an initiator device and provide an electromagnetic carrier field. The first loop antenna 204 of the main resonator loop 202 detects the carrier field and the main resonator loop 202 may draw operating power from the initiator-provided electromagnetic field. The resonator loop begins to resonate and a resonator current is induced. The current is fed to the near-field communication tag circuit 212 which is configured to store the received power into the power storage 216. As mentioned, the stored energy is used for the operation of the lock, provide sufficient electric power to the microcontroller and the actuator for operations such as communication with the communication device, authentication, and controlling the actuator so that the lock may be set in an openable state if authentication is successful.

The transfer of energy should be as reliable as possible as the operation of the lock depends on the energy. To increase the reliability, stability and capacity of the energy transfer, the antenna part comprises the one or more auxiliary resonator loops 224 and main resonator loop 202 harvests energy from the electromagnetic field.

In an embodiment, the structure and properties of the one or more auxiliary resonator loops are similar to the main resonator loop.

The one or more auxiliary resonator loops 224 are in the same electromagnetic field as the main resonator loop. In an embodiment, the one or more auxiliary resonator loops are floating, i.e. that are not electrically connected to any other device or component.

The auxiliary resonator loops balance the operation of the antenna circuit. The magnitude of energy transfer of the main resonator loop is such that the electrical properties of the transfer are not necessarily stable. For example, the resonance frequency of a single main resonator loop may be unsteady. By providing additional resonator loop the matching of the antenna circuit with the electromagnetic field increases. Return loss (so called S11) is better while the bandwidth remains the same on the used 13.56 MHz frequency. The antenna matching remains good especially when the communication device transmitting the electromagnetic field is relatively near (approximately within a few centimeters, typically below 2 cm) from the antenna circuit. This distance is typical for this kind of usage situations. The above balancing effects enable the main resonator loop to gather more energy than a standalone resonator loop of a similar size and properties could gather.

In an embodiment, the antenna circuit 200 and the one or more auxiliary resonator loops 224 are positioned inside the turn-knob 104 of the lock.

In an embodiment, the lock comprises a convex surface and the antenna circuit 200 and the one or more auxiliary resonator loops 224 are positioned under the convex surface. The convex surface may be the surface of the turn-knob 104 of the lock.

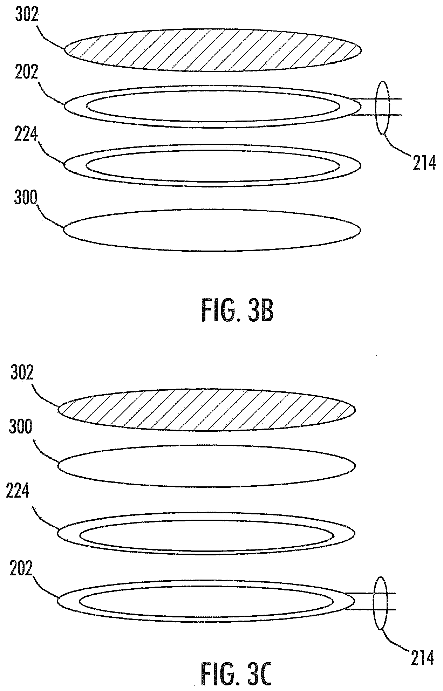

Figures 3A, 3B and 3C illustrate example of the realisation of the lock antenna 112. In the example of Figure 3A, the lock antenna 112 comprises a circuit board 300. The main resonator loop 202 may be on one side of the circuit board 300 and the one or more auxiliary resonator loops 224 may be on the other side of the circuit board.

In an embodiment, there is an electromagnetic shield 302 such as a ferrite placed between the lock resonator loops 202, 224, and the passive near-field communication tag circuit, the energy storage, the microcontroller and the actuator.

In the example of Figure 3B, the main resonator loop 202 and the one or more auxiliary resonator loops 224 may be on the same side of the circuit board 300 with the one or more auxiliary resonator loops closer to the circuit board.

In the example of Figure 3C, the main resonator loop 202 and the one or more auxiliary resonator loops 224 may be on the same side of the circuit board 300 with the electromagnetic shield 302 on the other side of the circuit board.

Component values of the main resonator loop 202 and the one or more auxiliary resonator loops 224vary depending on the case such as the surroundings of the lock antenna 112. The inductance of the antennas have an effect on the values of the capacitors and whether there is a ferrite disc between the lock antenna 112 and the electronic circuit 116. As a non-limiting numeric example, when the inductances of the antennas 204, 226 is about 2 uH the capacitors C1, C2, C4 and C5 may have values of 220pF and capacitors C3, C6 may have values of 15pF. For the main resonator loop 202 the total parallel capacitance is formed from the capacitance value 50 pF of the NFC chip and the value of C3. Likewise, for the additional resonator loops 224 the total parallel capacitance is formed from the capacitance value 50 pF of C6 and the capacitance of the NFC chip and. As mentioned, these values are merely illustrative.

It will be obvious to a person skilled in the art that, as technology advances, the inventive concept can be implemented in various ways. The invention and its embodiments are not limited to the example embodiments described above but may vary within the scope of the claims.

## Claims

1. A near-field communication -powered electromechanical lock comprising:
an antenna circuit comprising a main resonator loop comprising of a first loop antenna coupled in series with a first capacitor in a first part of the loop and a second capacitor in a second part of the loop, and coupled in parallel with a third capacitor between the first part and the second part;
a passive near-field communication tag circuit coupled with the antenna circuit;
an energy storage coupled with the passive near-filed communication tag circuit;
a microcontroller powered by the energy storage;
an electrically-controlled actuator powered by the energy storage;
one or more auxiliary resonator loops, each auxiliary resonator loop comprising of an auxiliary loop antenna coupled in series with fourth capacitor in a first part of the loop and a fifth capacitor in a second part of the loop, and coupled in parallel with a sixth capacitor between the first part and the second part;
wherein, the antenna circuit is configured to harvest electric energy from a near-field communication reader, store energy through the passive near-field communication tag circuit into the energy storage, which provides sufficient electric power to the microcontroller and the actuator, and wherein the one or more auxiliary resonator loops are configured to balance the operation of the antenna circuit.

2. The lock of claim 1, wherein the one or more auxiliary resonator loops are floating resonators.

3. The lock of claim 1 or 2, wherein the antenna circuit and the one or more auxiliary resonator loops are positioned inside a turn-knob of the lock.

4. The lock of any preceding claim, wherein the lock comprises a convex surface and the antenna circuit and the one or more auxiliary resonator loops are positioned under the convex surface.

5. The lock of any preceding claim, wherein an electromagnetic shield is placed between the antenna circuit and the one or more auxiliary resonator loops, and the passive near-field communication tag circuit, the energy storage, the microcontroller and the actuator.

6. The lock of any preceding claim, the lock comprising a circuit board, wherein the main resonator loop and the one or more auxiliary resonator loops are on different sides of the circuit board.

7. The lock of any preceding claim 1 to 5, the lock comprising a circuit board, wherein the main resonator loop and the one or more auxiliary resonator loops are of the same side of the circuit board.
